# EUROPÄISCHE PATENTSCHRIFT

(11) **EP 3 336 066 B1**
(45) Veröffentlichungstag und Bekanntmachung des Hinweises auf die Patenterteilung: **14.02.2024**
(21) Anmeldenummer: 17206188.9
(22) Anmeldetag: 08.12.2017
(51) Int. Cl.: C03B 23/04, B41M 5/26, C03C 23/00, G06K 19/06, B65C 3/02, B41M 7/00

(54) **VERFAHREN ZUM HERSTELLEN EINES HOHLGLASPRODUKTS AUS EINEM GLASROHR-HALBZEUG MIT MARKIERUNGEN, SOWIE VERWENDUNGEN HIERVON**
METHOD FOR PRODUCING A HOLLOW GLASS PRODUCT MADE FROM A SEMI-FINISHED GLASS TUBE WITH MARKINGS AND USES THEREOF
PROCÉDÉ DE FABRICATION D'UN PRODUIT EN VERRE CREUX À PARTIR D'UN DEMI-PRODUIT SOUS LA FORME DE TUBE DE VERRE POURVU DE MARQUAGES AINSI QUE SES UTILISATIONS

(30) Priorität: 19.12.2016 DE 102016124833
(43) Veröffentlichungstag der Anmeldung: 20.06.2018
(73) Patentinhaber: SCHOTT AG, 55122 Mainz (DE)
(72) Erfinder: Witzmann, Dr. André, 95679 Waldershof (DE); Trinks, Dr. Ulla, 95666 Mitterteich (DE); Männl, Reinhard, 95666 Mitterteich (DE)
(74) Vertreter: Fuchs Patentanwälte Partnerschaft mbB

(56) Entgegenhaltungen:
- WO-A2-99/10238
- US-A- 2 378 146

## Beschreibung

Die vorliegende Anmeldung beansprucht die Priorität der Deutschen Patentanmeldung Nr. 10 2016 124 833.9 "Verfahren zum Herstellen eines Hohlglasprodukts aus einem Glasrohr-Halbzeug mit Markierungen, sowie Verwendungen hiervon", angemeldet am 19. Dezember 2017.

### GEBIET DER ERFINDUNG

Die vorliegende Erfindung betrifft allgemein die Rückverfolgung von Hohlglasprodukten aus Glas, die aus Glasrohr-Halbzeugen hergestellt sind, insbesondere von Behältern für Substanzen für pharmazeutische, medizinische oder kosmetische Anwendungen, wie beispielsweise Vials, Karpulen oder Spritzenkörper, sowie Verwendungen hiervon. Insbesondere betrifft die vorliegende Erfindung ein verbessertes Verfahren zum Herstellen eines Hohlglasprodukts aus einem Glasrohr-Halbzeug mit zumindest einer Markierung, womit sich eine verbesserte und zuverlässige Rückverfolgung in einfacher Weise realisieren lässt, beispielsweise zum Zwecke einer Qualitätskontrolle und Qualitätsverbesserung.

### STAND DER TECHNIK

Aus dem Stand der Technik sind diverse Verfahren zur Markierung und Codierung von Halb- oder Fertigprodukten bekannt. Zur Markierung oder Codierung von Glas werden jedoch aufgrund der speziellen Materialeigenschaften und Herstellungsbedingungen üblicherweise Verfahren eingesetzt, bei denen Markierungen oder dergleichen unmittelbar in das Glasmaterial eingeschrieben werden.

Ein derartiges Verfahren ist beispielsweise in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Dabei wird das Glas abschnittsweise mit einem Laserpuls zur Aufbringung einer Markierung auf der Oberfläche beaufschlagt. Die Markierung ist deutlich sichtbar und kann insbesondere über eine von der Markierung ausgeübte Linsenwirkung zuverlässig ausgelesen werden, kann spannungsfrei bereits während der Herstellung bei hohen Temperaturen aufgebracht werden und eignet sich deshalb zum Aufbringen der Markierung bereits während der Herstellung von Glasrohr-Halbzeugen, also während der eigentlichen Rohrformgebung. Weil die Markierung bei Temperaturen oberhalb der Transformationstemperatur des Glases aufgebracht werden kann, können so Markierungen zur Bekämpfung der Produktpiraterie aufgebracht werden. Mit solchen Markierungen können jedoch auch Marken, Firmenlogos oder sonstige Produktausstattungen auf den Glasrohrstrang aufgebracht werden. Allerdings kann das Verfahren durchaus zu aufwändig für Anwendungen sein, die geringere Anforderungen an eine Authentizität stellen.

Weitere Verfahren zur Markierung von Glas-Substraten sind in WO 2004 000749 A1 und WO 2009 128893 A1 offenbart.

WO 2008 104688 A1 offenbart ein hohles Glasprodukt mit einer daran ausgebildeten Markierung, die Angaben zur Fertigungslinie und zum Herstellungsort enthält, was durch eine spezielle Zahlencodierung bewerkstelligt wird.

Zum Kennzeichnen oder Beschreiben von Glas mittels Laserstrahlung sind aus dem Stand der Technik weitere Verfahren bekannt, die mit Zusatzstoffen, Beschichtungen, Pigmenten oder zusätzlichen Dotierungen das Glas verändern und seine Transparenz mindestens an der mit Laser bearbeiteten Stelle nachteilig beeinflussen, wie beispielsweise in EP 761377 B1, DE 4224282 A1, DE 3121138 C2, DE 19926878 Al und US 6638440 B1 offenbart.

US 8196807 B2 offenbart die Markierung eines Pharmabehälters. Eine Rückverfolgung auf das Ursprungsprodukt Glasrohr ist nicht möglich.

WO 99/10238 A2 betrifft ein Verschließen von Ampullen mittels Laserstrahlung. US 2,378,146 A betrifft ein Verschließen von Glasröhren mittels mehrerer Gasbrenner.

Neben einem wirksamen Schutz gegen Fälschungen spielt auch eine erhöhte Produktsicherheit eine immer wichtigere Rolle. Insbesondere für Pharmabehälter, die zunehmend höhere Spezifikationen einhalten müssen, ist deshalb eine verbesserte Informationslage auch bezüglich Herkunft, konkreten Produktionsbedingungen etc. bei der Herstellung von Glasrohr-Halbzeugen sowie bei der Herstellung von Hohlglasprodukten aus Glasrohr-Halbzeugen zunehmend gewünscht.

### ZUSAMMENFASSUNG DER ERFINDUNG

Aufgabe der vorliegenden Erfindung ist es, in diesem Bereich für weitere Verbesserungen zu sorgen. Insbesondere sollen gemäß der vorliegenden Erfindung ein verbessertes Verfahren zum Herstellen eines Hohlglasprodukts aus einem Glasrohr-Halbzeug sowie Verwendungen hiervon bereitgestellt werden, womit sich eine verbesserte Produktsicherheit, beispielsweise zum Zwecke einer Qualitätskontrolle und Qualitätsverbesserung, in einfacher Weise realisieren lässt.

Diese Aufgabe wird durch ein Verfahren zum Herstellen eines Hohlglasprodukts aus einem Glasrohr-Halbzeug nach Anspruch 1 oder 2 gelöst. Weitere vorteilhafte Ausführungsformen sind Gegenstand der rückbezogenen Unteransprüche.

Gemäß einem ersten Gesichtspunkt der vorliegenden Erfindung wird ein Verfahren zum Herstellen eines Hohlglasprodukts aus einem Glasrohr-Halbzeug gemäß Anspruch 1 bereitgestellt.

Somit lässt sich durch Auslesen der Markierung erfindungsgemäß eindeutig feststellen, aus welchem Glasrohr-Halbzeug das Hohlglasprodukt hergestellt ist. Ferner lassen sich auch rohrspezifische Produktionsdaten dieses Glasrohr-Halbzeugs unmittelbar ermitteln und rückverfolgen. Somit lässt sich für das Hohlglasprodukt die gesamte Lieferkette vom Lieferanten des ursprünglich verwendeten Glasrohr-Halbzeugs bis hin zum Endprodukt eindeutig ermitteln. Für Qualitätssicherungszwecke und dergleichen lassen sich darüber hinaus auch die jeweiligen rohrspezifischen Produktionsdaten ermitteln. Erfindungsgemäß werden dabei die physikalischen und chemischen Eigenschaften des Glasrohr-Halbzeugs nicht verändert, was durch Aufbringen einer Markierung mittels eines Druckers, beispielsweise eines Tintenstrahldruckers, oder mittels eines Lasers in einfacher Weise realisiert werden kann. Somit kann eine Zuordnung der Daten, wie etwa bei der Verwendung von Zertifikaten oder dergleichen für Paletten oder Verpackungseinheiten von Glasrohr-Halbzeugen, erfindungsgemäß nicht verloren gehen, da bei direkter Codierung die Zuordnung festgelegt ist. Denn Paletten- oder Verpackungseinheiten-Zertifikate ermöglichen keine rohrspezifische Weitergabe von relevanten Qualitäts- und Fertigungsdaten.

Dass beim Aufbringen der Markierung die physikalischen und chemischen Eigenschaften des Glasrohr-Halbzeugs nicht verändert werden, soll im Sinne der vorliegenden Erfindung bedeuten, dass physikalischen und chemischen Eigenschaften der inneren Oberfläche des Glasrohr-Halbzeugs unverändert bleiben sollen, also die innere Oberfläche nicht durch eine Veränderung ihrer physikalischen und chemischen Eigenschaften beeinträchtigt wird, insbesondere gegen ein Auslaugen von Ionen in das Innere eines Hohlglasprodukts, das aus dem Glasrohr-Halbzeug hersgestellt werden soll.

Zur Feststellung der Herkunft des Glasrohr-Halbzeugs können Parameter oder Datensätze dienen, wie beispielsweise Zifferncodierungen, die einen Glasrohr-Hersteller, eine bei dem Glasrohr-Hersteller erzeugte Seriennummer, Batch-Nummer, Zugnummer, Herstellungsdatum etc. codieren. Im Sinne der vorliegenden Erfindung können diese Parameter um weitere Informationen ergänzt sein, die einen vollständigen Stammbaum des Glasrohr-Halbzeugs abbilden, das zur Herstellung des Hohlglasprodukts verwendet wurde.

Gemäß einem weiteren unabhängigen Gesichtspunkt der vorliegenden Erfindung, der eine selbständige Alternative zu obigem Verfahren bildet, wird ein Verfahren zum Herstellen eines Hohlglasprodukts aus einem Glasrohr-Halbzeug gemäß Anspruch 2 bereitgestellt.

Dieses Verfahren eignet sich insbesondere dann, wenn die Prozessbedingungen bei der Weiterverarbeitung des Glasrohr-Halbzeugs zu dem Hohlglasprodukt eine Unveränderlichkeit der ersten Markierung mit den relevanten Informationen nicht zulassen, etwa weil der betreffende Abschnitt, auf dem die erste Markierung vorgesehen ist, so verformt oder bearbeitet wird, dass ein Auslesen der ersten Markierung nicht mehr möglich ist. Stattdessen wird diese Information zu einem geeigneten Zeitpunkt bei der Weiterverarbeitung ausgelesen, beispielsweise vor Beginn der Weiterverarbeitung, und zu einem geeigneten Zeitpunkt eine neue oder andere Markierung auf dem Hohlglasprodukt aufgebracht, wozu grundsätzlich beliebige Markierungsverfahren eingesetzt werden können, insbesondere solche Markierungsverfahren, bei denen die physikalischen und chemischen Eigenschaften des Glasrohr-Halbzeugs nicht verändert werden, beispielsweise durch Aufbringen einer Markierung mittels eines Druckers (z.B. als Strich- oder Balkencode) oder mittels eines Lasers. Grundsätzlich als Markierungsverfahren geeignet sind jedoch auch solche Verfahren, die die physikalischen oder chemischen Eigenschaften des Glases des Hohlglasprodukts verändern, einschließlich der Verfahren mit Lasermarkieren nach US 2003 0029849 A1, DE 102 34 002 A1 und WO 2012 028611 A1 der Anmelderin, deren Inhalt hiermit im Wege der Bezugnahme ausdrücklich mit aufgenommen sei. Dass beim Aufbringen der Markierung die physikalischen und chemischen Eigenschaften des Glasrohr-Halbzeugs nicht verändert werden, soll im Sinne der vorliegenden Erfindung bedeuten, dass physikalischen und chemischen Eigenschaften der inneren Oberfläche des Glasrohr-Halbzeugs unverändert bleiben sollen, also die innere Oberfläche nicht durch eine Veränderung ihrer physikalischen und chemischen Eigenschaften beeinträchtigt wird, insbesondere gegen ein Auslaugen von Ionen in das Innere eines Hohlglasprodukts, das aus dem Glasrohr-Halbzeug hersgestellt werden soll.

Gemäß einer weiteren Ausführungsform wird die erste Markierung bei der Rohrformgebung kontinuierlich oder diskontinuierlich unter vorbestimmten Abständen zueinander in Längsrichtung des Glasrohr-Halbzeugs erzeugt. Diese Abstände können insbesondere auf die später an dem Glasrohr-Halbzeug auszuführenden Prozessschritte zu dessen Weiterverarbeitung abgestimmt sein. Ist also beispielsweise bekannt, dass später Einzelsegmente einer vorbestimmten Länge von dem Glasrohr-Halbzeug abgetrennt werden sollen, um zu einem Hohlglasprodukt weiter verarbeitet zu werden, so können die ersten Markierungen jeweils unter diesem vorbestimmten Abstand zueinander aufgebracht werden um sicherzustellen, dass später auf jedem Hohlglasprodukt eine erste Markierung aufgebracht ist.

Gemäß einer weiteren Ausführungsform wird die erste oder zusätzliche Markierung als einzelne Markierung an einer vorbestimmten Position auf dem Glasrohr-Halbzeug erzeugt. Diese erste oder zusätzliche Markierung kann insbesondere bei einem weiterverarbeitenden Betrieb abgetrennt und durch eine neue Markierung ersetzt werden, oder dort um eine zusätzliche Markierung ergänzt werden. Weil diese Information an einer vorbestimmten Position vorgesehen ist, kann diese in einfacher Weise zuverlässig automatisiert ausgelesen werden, weil die Markierung nicht erst aufwändig auf der Oberfläche des Hohlglasprodukts gesucht zu werden braucht.

Gemäß einer weiteren Ausführungsform wird die zusätzliche Markierung bei Temperaturen oberhalb der Transformationstemperatur (T_{G}) des Glases des Glasrohr-Halbzeugs erzeugt. So kann in einfacher Weise eine hohe Fälschungssicherheit gewährleistet werden, da häufig eine erneute Erwärmung von Hohlglasprodukten auf Temperaturen oberhalb der Transformationstemperatur (T_{G}) des Glases technisch bedingt unmöglich ist, etwa wenn das Hohlglasprodukt bereits mit einer Substanz befüllt ist, oder wenn das Hohlglasprodukt mit derart hoher Genauigkeit hergestellt wurde, dass die Toleranzen bei einer erneuten Erwärmung auf Temperaturen oberhalb der Transformationstemperatur (T_{G}) des Glases nicht erneut eingehalten werden können.

Gemäß einer weiteren Ausführungsform wird die zweite Markierung während einer Vereinzelung des Glasrohr-Halbzeugs aus einem Endlos-Glasrohrstrang erzeugt. Da die Vereinzelung nur beim Original-Hersteller vorgenommen werden kann, ist so automatisch auch eine hohe Fälschungssicherheit gewährleistet.

### FIGURENÜBERSICHT

Nachfolgend wird die Erfindung in beispielhafter Weise und unter Bezugnahme auf die beigefügten Zeichnungen beschrieben, woraus sich weitere Merkmale, Vorteile und zu lösende Aufgaben ergeben werden. Es zeigen:
- Fig. 1a: ein erstes Beispiel für ein Glasrohr-Halbzeug zur Verwendung in einem Verfahren gemäß der vorliegenden Erfindung zum Herstellen eines Hohlglasprodukts;
- Fig. 1b: ein zweites Beispiel für ein Glasrohr-Halbzeug zur Verwendung in einem Verfahren gemäß der vorliegenden Erfindung zum Herstellen eines Hohlglasprodukts;
- Fig. 1c: ein drittes Beispiel für ein Glasrohr-Halbzeug zur Verwendung in einem Verfahren gemäß der vorliegenden Erfindung zum Herstellen eines Hohlglasprodukts;
- Fig. 2a: ein erstes Beispiel für ein aus einem Glasrohr-Halbzeug hergestelltes Hohlglasprodukt mit einer vergrößerten Darstellung von daran vorgesehenen Markierungen;
- Fig. 2b: ein zweites Beispiel für ein aus einem Glasrohr-Halbzeug hergestelltes Hohlglasprodukt mit einer vergrößerten Darstellung einer daran vorgesehenen Markierung;
- Fig. 3: ein schematisches Flussdiagramm eines Verfahrens gemäß der vorliegenden Erfindung zur Herstellung eines Hohlglasprodukts, das durch Weiterverarbeiten eines Glasrohr-Halbzeugs einschließlich einer zumindest abschnittsweisen thermischen Umformung des Glasrohr-Halbzeugs hergestellt ist;
- Fig. 4: ein schematisches Flussdiagramm eines Verfahrens zur Rückverfolgung eines Hohlglasprodukts, das durch Weiterverarbeiten eines Glasrohr-Halbzeugs einschließlich einer zumindest abschnittsweisen thermischen Umformung des Glasrohr-Halbzeugs hergestellt ist;
- Fig. 5: ein schematisches Diagramm einer Vorrichtung zur Rückverfolgung eines Hohlglasprodukts, das durch Weiterverarbeiten eines Glasrohr-Halbzeugs einschließlich einer zumindest abschnittsweisen thermischen Umformung des Glasrohr-Halbzeugs hergestellt ist;
- Fig. 6a: schematisch in verschiedenen Stadien der Weiterverarbeitung eines Glasrohr-Halbzeugs die an dem Glasrohr-Halbzeug vorgesehenen Markierungen zusammenfasst; und
- Fig. 6b: ein schematisches Flussdiagramm der verschiedenen Stadien der Weiterverarbeitung eines Glasrohr-Halbzeugs zu einem Pharma-Packmittel und dessen weitere Verarbeitung.

In den Figuren bezeichnen identische Bezugszeichen identische oder im Wesentlichen gleichwirkende Elemente oder Gruppen von Elementen.

### AUSFÜHRLICHE BESCHREIBUNG VON AUSFÜHRUNGSBEISPIELEN

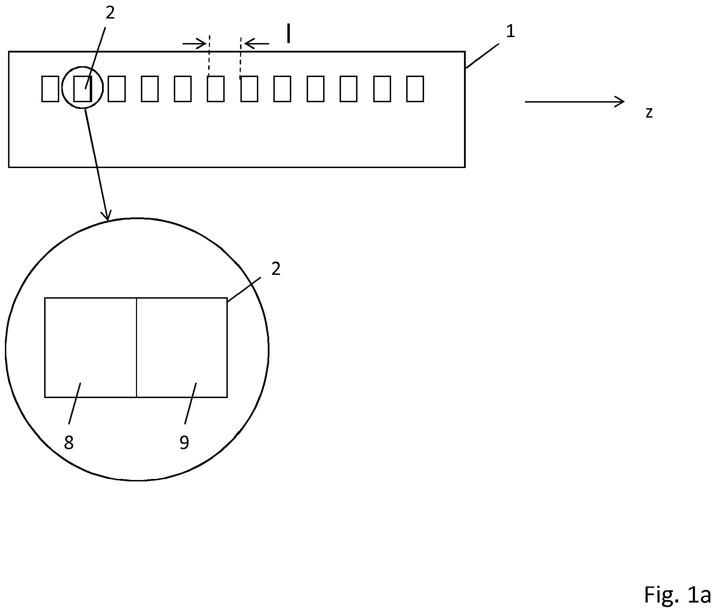

Fig. 1a zeigt ein erstes Beispiel für ein Glasrohr-Halbzeug, das gemäß der vorliegenden Erfindung zur Herstellung eines Hohlglasprodukts daraus, wie nachfolgend näher beschrieben, verwendet wird, mit einer vergrößerten Darstellung von daran vorgesehenen Markierungen. Zur Herstellung des Glasrohr-Halbzeugs 1 wird auf den Glasrohrstrang fortwährend eine Rohrstrangmarkierung 2 ("erste Markierung") aufgebracht, die zumindest eine erste Information 8 enthält. Diese erste Information 8 enthält erfindungsgemäß Information, die entweder unmittelbar oder mittelbar, d.h. unter Zugriff auf Daten einer Datenbank oder eines Datenträgers, die Herkunft des Glasrohr-Halbzeugs 1 anzeigt, worunter im Sinne der vorliegenden Anmeldung insbesondere Angaben zu Hersteller, Produktionsort und/oder Produktionsanlage des Glasrohrs 1 fallen. Diese Parameter können grundsätzlich auch variabel sein, z.B.: Glasart, spezifische Produktionsbedingungen wie z.B. Sortiereinstellungen. Diese Angaben zur Herkunft des Glasrohr-Halbzeugs 1 können nicht kodiert in die erste Information 8 geschrieben sein, können jedoch grundsätzlich auch codiert sein und sind dann nicht in Klarschrift auslesbar, sondern erst entsprechend einer vorbestimmten Rechen- oder Decodierungsanweisung auslesbar. Wie nachfolgend ausgeführt, kann diese erste Markierung erfindungsgemäß grundsätzlich auch bei der weiteren Verarbeitung bis zum Hohlglasprodukt (beispielsweise Pharmabehälter) unverändert erhalten bleiben.

Gemäß der Fig. 1a sind die Rohrstrangmarkierungen 2 in der Längsrichtung (z) des Glasrohr-Halbzeugs 1 bevorzugt unter vorbestimmten, konstanten Abständen (l) zueinander auf dem Glasrohr-Halbzeug 1 angebracht. Diese Abstände l können beispielsweise abgestimmt sein auf die zu erwartenden Längen derjenigen Abschnitte, aus denen später die Hohlglasprodukte (beispielsweise Pharmabehälter) hergestellt werden sollen und die hierzu von einem Original-Glasrohr-Halbzeug abgelängt werden müssen, einschließlich etwaigen Verschnitts und abzutrennender Abschnitte.

Zweckmäßig enthält die vorgenannte erste Markierung 1 zusätzlich zumindest eine weitere Information, um eine spätere Rückverfolgbarkeit eines von einem Glasrohr-Halbzeug abgetrennten Glasrohr-Halbzeugabschnitts 1 oder des später daraus hergestellten Hohlglasprodukts (beispielsweise Pharmabehälter) zu ermöglichen. Bei dieser weiteren Information kann es sich insbesondere um Daten bezüglich Chargennummer, Rohrstrangnummer, eine Serien-Nummer eines aus dem Rohrstrang vereinzelten Glasrohr-Halbzeugs, Herstellungszeit etc. handeln.

Weiter kann die Rohrstrangmarkierung 2 zusätzliche Informationen zu rohrspezifischen Produktionsdaten enthalten, worunter im Sinne der vorliegenden Anmeldung insbesondere Produktionsparameter bei der Rohrformgebung (beispielsweise Glasschmelze, Verarbeitungstemperaturen, Abzugsgeschwindigkeit des Glasrohrstrangs, verwendete Formgebungsmittel, wie beispielsweise Danner-Pfeife oder Vello-Düse, sowie deren Abmessungen und Eigenschaften, Temperatur und Prozessbedingungen bei der Abkühlung des Glasrohrstrangs nach der Rohrformgebung), Rohr-Fertigungsdaten und Sortiereinstellungen bei der Vereinzelung der Glasrohr-Halbzeuge fallen sollen. Diese Parameter können grundsätzlich auch variabel sein, z.B.: Glasart, spezifische Produktionsbedingungen wie z.B. Sortiereinstellungen.

Die Informationen 8, 9 ermöglichen erfindungsgemäß eine Rückverfolgung der gesamten Lieferkette eines Glasrohr-Halbzeugs 1, insbesondere entweder durch unmittelbares Auslesen der relevanten Informationen aus der Markierung 2 oder mittelbar unter Zugriff auf eine externe Datenbank oder einen Datenträger, ggf. unter Verwendung der aus der Markierung 2 ausgelesenen Information.

Die Rohrstrangmarkierungen 2 werden bevorzugt unmittelbar auf den noch kontinuierlichen Glasrohrstrang aufgebracht, können jedoch auch grundsätzlich erst im Anschluss an ein Ablängen und eine Vereinzelung von Glasrohr-Halbzeugen 1 aus einem Glasrohrstrang aufgebracht werden. Erfindungsgemäß werden die Markierungen 2 ohne Veränderung der physikalischen und chemischen Eigenschaften des Glasrohr-Halbzeugs 1 aufgebracht, was beispielsweise durch Aufdrucken einer Markierung oder mittels Lasermarkierung erfolgen kann. Es werden dabei höchstens lokal die physikalischen Eigenschaften verändert, aber dieser Abschnitt bzw. das Rohrende wird später bei einem weiterverarbeitenden Betrieb wieder entfernt, wie nachfolgend ausgeführt. Die Markierungen 2 können in der üblichen Weise kodiert sein, beispielsweise in Gestalt eines Matrix-Codes, Strichcodes, können die Information jedoch auch in alphanumerischer Schreibweise anzeigen.

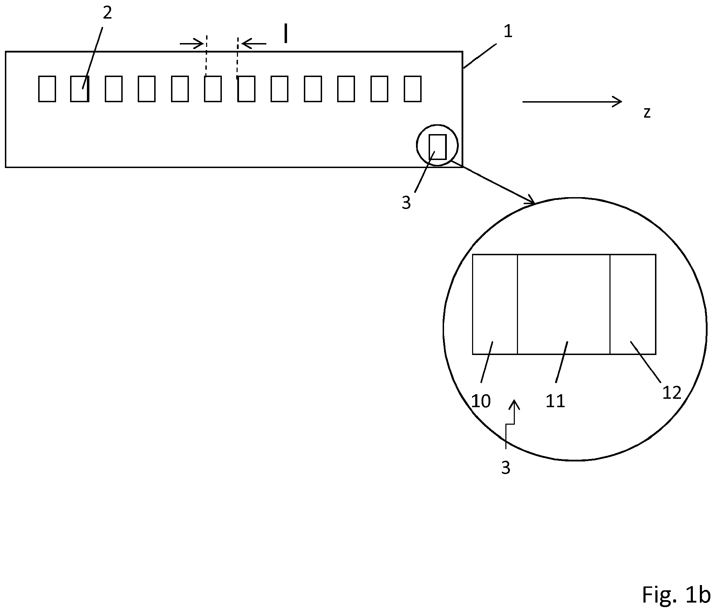

Fig. 1b zeigt ein zweites Beispiel für ein Glasrohr-Halbzeug 1. Neben der vorgenannten Rohrstrangmarkierung 2 ist auf dem Glasrohr-Halbzeug 1 zumindest eine zweite Markierung 3 an geeigneter Position vorgesehen, beispielsweise an einem jeweiligen Beginn oder Ende eines Glasrohr-Halbzeugs 1. Diese zweite Markierung 3 enthält zumindest eine erste Information 10 und eine zweite Information 11, kann jedoch grundsätzlich noch weitere Information 12 enthalten. Die Informationen 10, 11 ermöglichen, ggf. gemeinsam mit der Rohrstrangmarkierung 2, erfindungsgemäß eine Rückverfolgung der gesamten Lieferkette eines Glasrohr-Halbzeugs 1. Hierzu kann die erste Information 10 die Herkunft des Glasrohr-Halbzeugs 1 anzeigen, während die zweite Information rohrspezifische Produktionsdaten anzeigt, wie vorstehend ausgeführt.

Die weitere Information 12 kann einen Teil der rohrspezifischen Produktionsdaten anzeigen, der für eine Rückverfolgbarkeit des Glasrohr-Halbzeugs 1 nicht zwingend notwendig ist. Ein Beispiel ist, dass diese Information 12 Rückschlüsse ermöglicht, welche Einrichtung zum Erzeugen der Rohrstrangmarkierung 2 und/oder der zweiten Markierung 3 auf dem Glasrohr-Halbzeug 1 verwendet wurde. Dabei kann es sich beispielsweise um eine Seriennummer, Typenbezeichnung etc. einer solchen Einrichtung handeln, die vom Original-Hersteller des Glasrohr-Halbzeugs 1 oder von einem von diesem dazu autorisierten Gerätehersteller zur Verfügung gestellt wird. Diese Information kann auch zusätzlich durch einen externen Dienstleister, beispielsweise eine Prüfagentur, zertifiziert sein. Diese Information kann in Klarschrift auslesbar sein, ist jedoch bevorzugt entsprechend einer vorbestimmten Rechen- oder Decodierungsvorschrift auslesbar.

Bevorzugt wird auch die zweite Markierung 3 auf das Glasrohr-Halbzeug 1 ohne Veränderung der physikalischen und chemischen Eigenschaften des Glasrohr-Halbzeugs 1 aufgebracht, was beispielsweise durch Aufdrucken einer Markierung oder mittels Lasermarkierung erfolgen kann. Die Markierungen 2, 3 können in der üblichen Weise kodiert sein, beispielsweise in Gestalt eines Matrix-Codes, Strichcodes, können die Information jedoch auch in alphanumerischer Schreibweise anzeigen.

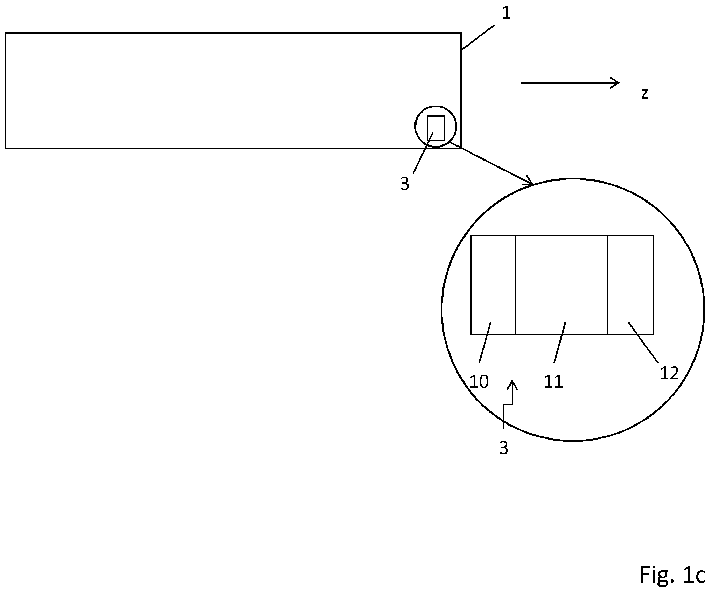

Fig. 1c zeigt ein drittes Beispiel für ein Glasrohr-Halbzeug 1. Abweichend zu den vorherigen Ausführungsbeispielen ist die vorgenannte Rohrstrangmarkierung 2 nicht auf dem Glasrohr-Halbzeug 1 vorgesehen, sondern ist sämtliche relevante Information in der Markierung 3 enthalten, die an geeigneter Position auf dem Glasrohr-Halbzeug 1 vorgesehen ist, beispielsweise an einem jeweiligen Beginn oder Ende eines Glasrohr-Halbzeugs 1.

Die Markierung 3 enthält zumindest eine erste Information 10 und eine zweite Information 11, kann jedoch grundsätzlich noch weitere Information 12 enthalten. Die Informationen 10, 11 ermöglichen erfindungsgemäß eine Rückverfolgung der gesamten Lieferkette eines Glasrohr-Halbzeugs 1. Hierzu kann die erste Information 10 die Herkunft des Glasrohr-Halbzeugs 1 anzeigen, während die zweite Information 11 rohrspezifische Produktionsdaten anzeigt, wie vorstehend ausgeführt. Die weitere Information 12 kann einen Teil der rohrspezifischen Produktionsdaten anzeigen, der für eine Rückverfolgbarkeit des Glasrohr-Halbzeugs 1 nicht zwingend notwendig ist, wie vorstehend anhand der Fig. 1b ausgeführt.

Bevorzugt wird die zweite Markierung 3 auf das Glasrohr-Halbzeug 1 ohne Veränderung der physikalischen und chemischen Eigenschaften des Glasrohr-Halbzeugs 1 aufgebracht, was beispielsweise durch Aufdrucken einer Markierung oder mittels Lasermarkierung erfolgen kann. Die zweite Markierung 3 kann in der üblichen Weise kodiert sein, beispielsweise in Gestalt eines Matrix-Codes, Strichcodes, kann diese Information jedoch auch in alphanumerischer Schreibweise anzeigen.

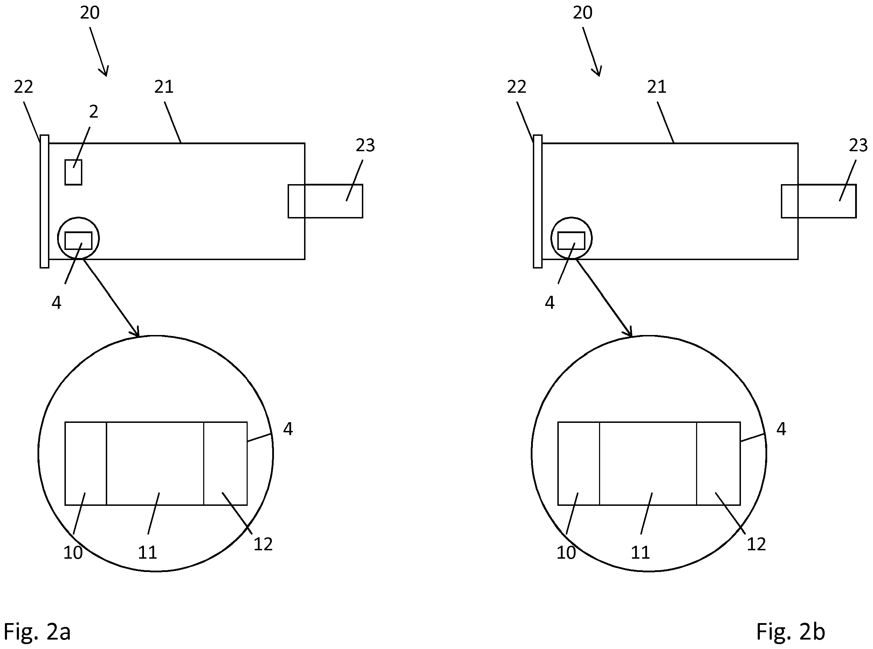

Die Fig. 2a zeigt ein erstes Beispiel für ein Hohlglasprodukt, das aus einem Glasrohr-Halbzeug, wie vorstehend beschrieben, hergestellt wurde, mit einer vergrößerten Darstellung von daran vorgesehenen Markierungen. Bei dem Hohlglasprodukt handelt es sich bei diesem Ausführungsbeispiel um einen Pharmabehälter 20 in Gestalt eines hohlzylindrischen Spritzenkörpers 21 mit einem Flansch 22 und einer Ausstoßöffnung 23, wenngleich die vorliegende Erfindung nicht auf solche Hohlglasprodukte beschränkt sein soll.

Gemäß der Fig. 2a sind auf dem Spritzenkörper 21 eine erste Markierung 2 und eine zweite Markierung 4 aufgebracht, zweckmäßig an zueinander beabstandeten Positionen. Bei der ersten Markierung 2 handelt es sich bevorzugt um eine Rohrstrangmarkierung, wie vorstehend anhand der Figuren 1a-1c beschrieben. Grundsätzlich kann diese erste Markierung 2 sämtliche Information beinhalten, um entweder unmittelbar oder mittelbar eine Entscheidung zur Herkunft und/oder zu den rohrspezifischen Produktionsdaten desjenigen Glasrohr-Halbzeugs zu ermöglichen, das zur Herstellung des Hohlglasprodukts 20 konkret verwendet wurde, wie vorstehend anhand der Fig. 1a beschrieben, um eine Zuordnung des Hohlglasprodukts zu einem Ausgangs-Glasrohr zu ermöglichen, das zu dessen Herstellung verwendet wurde. Bei der Herstellung des Hohlglasprodukts 20 aus dem Glasrohr-Halbzeug kann diese Markierung 2 grundsätzlich auf der Außenwand des Hohlglasprodukts 20 unverändert erhalten bleiben, was eine entsprechende Steuerung des Herstellungsverfahrens voraussetzt, insbesondere eine Umformung nur in Bereichen, die ausreichend weit beabstandet zur ersten Markierung 2 sind, sodass diese nicht wesentlich verändert wird.

Wenn die erste Markierung 2 nicht alleine die vollständige Information beinhaltet, um eine Entscheidung zur Herkunft und/oder zu den rohrspezifischen Produktionsdaten desjenigen Glasrohr-Halbzeugs zu ermöglichen, so kann gemäß der Fig. 2a auf dem Spritzenkörper 21 weiter eine zweite Markierung 4 aufgebracht sein. Diese zweite Markierung 4 kann der Markierung 3 gemäß den Figuren 1b und 1c entsprechen, die eine vollständige Information beinhaltet, um entweder unmittelbar oder mittelbar eine Entscheidung zur Herkunft und/oder zu den rohrspezifischen Produktionsdaten desjenigen Glasrohr-Halbzeugs zu ermöglichen, das zur Herstellung des Spritzenkörpers 21 verwendet wird.

Grundsätzlich kann die zweite Markierung 4 auch während oder im Anschluss an die Weiterverarbeitung des Glasrohr-Halbzeugs zu dem Hohlglasprodukt 20 auf dieses aufgebracht werden. Hierzu kann beispielsweise die Information, die zuvor auf dem Glasrohr-Halbzeug vorhanden war, ausgelesen werden und die zweite Markierung 4 neu auf das Hohlglasprodukt 20 aufgebracht werden. Ggf. kann dabei auch zusätzliche Information in die zweite Markierung 4 eingeschrieben werden, also beispielsweise zu den Prozessparametern, die während der Weiterverarbeitung des Glasrohr-Halbzeugs zu dem Hohlglasprodukt 20 verwendet werden.

Bevorzugt wird die zweite Markierung 4 auf das Hohlglasprodukt 20 ohne Veränderung der physikalischen und chemischen Eigenschaften des Hohlglasprodukts 20 aufgebracht, was beispielsweise durch Aufdrucken einer Markierung oder mittels Lasermarkierung erfolgen kann. Die zweite Markierung 4 kann in der üblichen Weise kodiert sein, beispielsweise in Gestalt eines Matrix-Codes, Strichcodes, kann die Information jedoch auch in alphanumerischer Schreibweise anzeigen.

Die Fig. 2b zeigt ein zweites Beispiel für ein Hohlglasprodukt, das aus einem Glasrohr-Halbzeug, wie vorstehend beschrieben, hergestellt wurde, mit einer vergrößerten Darstellung von daran vorgesehenen Markierungen.

Gemäß der Fig. 2b ist auf dem Spritzenkörper 21 eine Markierung 4 aufgebracht. Bei der Markierung 4 handelt es sich bevorzugt um eine Rohrstrangmarkierung, wie vorstehend anhand der Fig. 1a beschrieben, die sämtliche Information beinhaltet, um entweder unmittelbar oder mittelbar eine Entscheidung zur Herkunft und/oder zu den rohrspezifischen Produktionsdaten desjenigen Glasrohr-Halbzeugs zu ermöglichen, das zur Herstellung des Spritzenkörpers 21 konkret verwendet wurde, wie vorstehend anhand der Fig. 1a beschrieben, um eine Zuordnung des Hohlglasprodukts 20 zu einem Ausgangs-Glasrohr zu ermöglichen, das zu dessen Herstellung verwendet wurde. Bei der Herstellung des Hohlglasprodukts 20 aus dem Glasrohr-Halbzeug kann die Markierung 2 grundsätzlich auf der Außenwand des Hohlglasprodukts 20 unverändert erhalten bleiben und als Markierung 4 verwendet werden, was eine entsprechende Steuerung des Herstellungsverfahrens voraussetzt, insbesondere eine Umformung nur in Bereichen, die ausreichend weit beabstandet zur Markierung 2 sind, sodass diese nicht wesentlich verändert wird.

Grundsätzlich kann die Markierung 4 auch während oder im Anschluss an die Weiterverarbeitung des Glasrohr-Halbzeugs zu dem Hohlglasprodukt 20 auf dieses aufgebracht werden. Hierzu kann beispielsweise die Information, die zuvor auf dem Glasrohr-Halbzeug vorhanden war, ausgelesen werden und die Markierung 4 neu auf das Hohlglasprodukt 20 aufgebracht werden. Ggf. kann dabei auch zusätzliche Information in die Markierung 4 eingeschrieben werden, also beispielsweise zu den Prozessparametern, die während der Weiterverarbeitung des Glasrohr-Halbzeugs zu dem Hohlglasprodukt 20 verwendet werden.

Bevorzugt wird die Markierung 4 auf das Hohlglasprodukt 20 ohne Veränderung der physikalischen und chemischen Eigenschaften des Hohlglasprodukts 20 aufgebracht, was beispielsweise durch Aufdrucken einer Markierung oder mittels Lasermarkierung erfolgen kann. Die Markierung 4 kann in der üblichen Weise kodiert sein, beispielsweise in Gestalt eines Matrix-Codes, Strichcodes, kann die Information jedoch auch in alphanumerischer Schreibweise anzeigen.

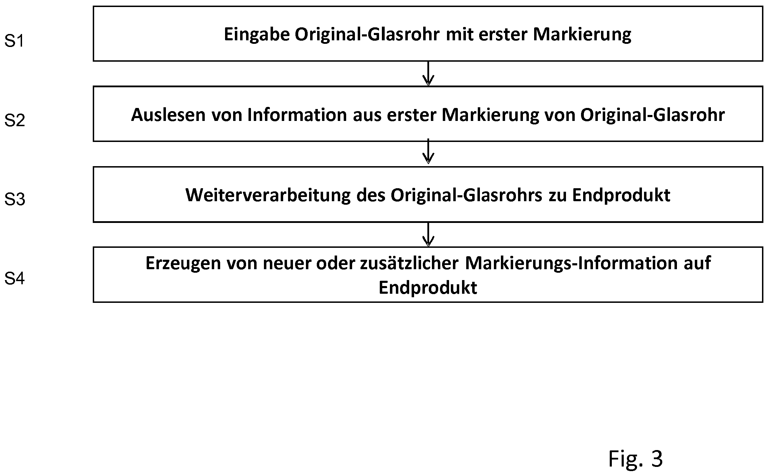

Die Fig. 3 zeigt ein schematisches Flussdiagramm eines Verfahrens zur Herstellung eines Hohlglasprodukts gemäß der vorliegenden Erfindung, das durch Weiterverarbeiten eines Glasrohr-Halbzeugs einschließlich einer zumindest abschnittsweise ausgeführten thermischen Umformung des Glasrohr-Halbzeugs hergestellt wurde, insbesondere bei Temperaturen oberhalb der Transformationstemperatur des Glases. Beispielsweise kann das Glasrohr-Halbzeug an einem Ende ausreichend erwärmt und dann in diesem Bereich thermisch umgeformt werden. Dieses Verfahren wird bevorzugt bei einem weiterverarbeitenden Betrieb ausgeführt, der von einem Original-Hersteller Original-Glasrohr-Halbzeuge bezieht und diese zu gewünschten Hohlglasprodukten weiterverarbeitet. Ein bevorzugtes Beispiel für solche Hohlglasprodukte, die im Sinne der vorliegenden Erfindung aus Original-Glasrohr-Halbzeugen hergestellt werden, sind Behälter für Substanzen für pharmazeutische, medizinische oder auch kosmetische Anwendungen.

Zunächst wird in dem Schritt S1 ein Glasrohr-Halbzeug, wie vorstehend anhand der Figuren 1a-1c beschrieben, zu dessen Weiterverarbeitung in den Prozess eingespeist. Das Original-Glasrohr ist dabei zumindest mit einer Markierung versehen, insbesondere einer Markierung, wie vorstehend anhand der Fig. 1c beschrieben, die sämtliche Information beinhaltet, um eine Entscheidung zur Herkunft und/oder zu den rohrspezifischen Produktionsdaten des Glasrohr-Halbzeugs zu ermöglichen.

Anschließend wird die Information der Markierung(en) in den Schritt S2 ausgelesen und steht für die weitere Verarbeitung zur Verfügung. Voraussetzung ist hierzu, dass der weiterverarbeitende Betrieb hierzu Kenntnis von allen relevanten Informationen und Spezifikationen hat, in welcher Weise die Markierung(en) von dem Original-Glasrohr auszulesen und weiter zu verarbeiten ist, beispielsweise zum Zwecke einer Decodierung und erneuten Codierung zum Aufbringen einer neuen oder zusätzlichen Markierung in dem Schritt S4. Denkbar ist hierzu grundsätzlich, dass die relevanten Einrichtungen beim weiterverarbeitenden Betrieb, insbesondere eine Einrichtung zum Auslesen der Markierung(en) und eine Einrichtung zum Aufbringen einer neuen oder zusätzlichen Markierung in dem Schritt S4, über ein Netzwerk, wie beispielsweise das Internet, bevorzugt über eine gesicherte Verbindung mit Verschlüsselung, mit einem Zentralprozessor oder einer Datenbank das Herstellers der Original-Glasrohre in Verbindung stehen.

Die Markierung auf dem Glasrohr-Halbzeug kann grundsätzlich während der Weiterverarbeitung des Original-Glasrohrs in dem Schritt S3 beim weiterverarbeitenden Betrieb unverändert auf dem Hohlglasprodukt erhalten bleiben. Während der Weiterverarbeitung des Original-Glasrohrs in dem Schritt S3 beim weiterverarbeitenden Betrieb kann dabei nach vorherigem Auslesen der relevanten Informationen die Markierung auch von dem Glasrohr-Halbzeug entfernt werden, beispielsweise durch Abtrennen eines Endabschnitts des Original-Glasrohrs mit der Markierung, und durch eine neue Markierung in dem Schritt S4 ersetzt werden. Oder die ursprünglich auf dem Glasrohr-Halbzeug vorgesehene Information wird durch eine zusätzliche Markierungs-Information in dem Schritt S4 ergänzt. Hierüber kann auch eine entsprechende Rückmeldung an den Hersteller des Original-Glasrohrs erfolgen, etwa zur Aktualisierung einer von dem Hersteller betriebenen Datenbank mit relevanten Informationen zu sämtlichen von dem Hersteller hergestellten Glasrohre.

Die Weiterverarbeitung des Original-Glasrohr-Halbzeugs kann insbesondere eine abschnittsweise thermische Umformung bei Temperaturen oberhalb der Transformationstemperatur des Glases beinhalten. Dabei kann im noch wärmeweichen Zustand des Glases in dem Schritt S4 eine neue oder zusätzliche Information auf dem umgeformten Hohlglasprodukt aufgebracht werden, bevorzugt in Gestalt eines digitalen Matrix-Codes (DMC) mittels eines Verfahrens, wie in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Die vorgenannten Daten können dabei in Klarschrift oder mittels einer vorbestimmten Codierung aufgebracht werden.

Selbstverständlich kann im Sinne der vorliegenden Erfindung vorgesehen sein, dass der weiterverarbeitende Betrieb seinerseits relevante Prozessparameter bei der Weiterverarbeitung des Original-Glasrohrs- Halbzeugs zu dem Hohlglasprodukt misst und aufzeichnet. Diese Information kann in die Erzeugung der neuen oder zusätzlichen Markierung auf dem Hohlglasprodukt mit einfließen, z.B. dadurch, dass die relevanten Prozessparameter unmittelbar in die neue oder zusätzliche Markierung aufgenommen werden, oder dadurch, dass ein entsprechender Link auf die entsprechenden Datensätze in einer von dem weiterverarbeitenden Betrieb betriebenen Datenbank in die neue oder zusätzliche Markierung integriert wird, auf die jedenfalls der Original-Hersteller der Original-Glasrohre und der weiterverarbeitende Betrieb, ggf. jedoch auch weitere Parteien, wie beispielsweise Zertifizierungs-Dienstleister, Zugriff haben.

Die zumindest eine Markierung, die schließlich auf dem Hohlglasprodukt vorgesehen ist (vgl. Figuren 2a und 2b), ist erfindungsgemäß in jedem Fall so beschaffen, um entweder unmittelbar oder mittelbar eine Entscheidung zur Herkunft und/oder zu den rohrspezifischen Produktionsdaten desjenigen Glasrohr-Halbzeugs zu ermöglichen, das zur Herstellung des Hohlglasprodukts verwendet wurde. Auf diese Weise lässt sich erfindungsgemäß die Lieferkette vollständig vom Ausgangs-Glasrohr bis hin zum Hohlglasprodukt nachverfolgen, einschließlich von relevanter Ursprungsinformation zum Glasrohr-Halbzeug, Produktionsdaten von Lieferanten des Glasrohr-Halbzeugs, Produktionsparameter, Rohr-Fertigungsdaten, Sortiereinstellungen etc.

Mit andere Worten: erfindungsgemäß wird ein vollständiger Stammbaum der relevanten Daten vom Original-Glasrohr bzw. vom entsprechenden Abschnitt davon bis hin zum Hohlglasprodukt möglich, sodass nicht nur eine Rückverfolgbarkeit ermöglicht ist, sondern zum Zwecke einer Qualitätskontrolle und Optimierung von Logistik- und Weiterverarbeitungsschritten auch eine vollständige Rückverfolgbarkeit zu sämtlichen relevanten Parametern des Original-Glasrohrs bzw. des entsprechenden Abschnitts davon möglich ist. So kann bereits bei der Rohrformgebung der Endlos-Rohrstrang mit allen relevanten Ursprungsparametern (Hersteller, Seriennummer, Glasschmelze, Rohrzug ...) markiert werden.

Durch die Codierung bzw. Markierung des Hohlglasprodukts beim weiterverarbeitenden Betrieb kann auch am Hohlglasprodukt, z.B. auf Seiten des Verbrauchers, eine vollständige Rückverfolgbarkeit zu sämtlichen relevanten Parametern des Original-Glasrohrs bzw. des entsprechenden Abschnitts davon ermöglicht werden.

Damit stehen auch später wichtige Informationen für Reklamationen oder Schadensanalysen zur Verfügung.

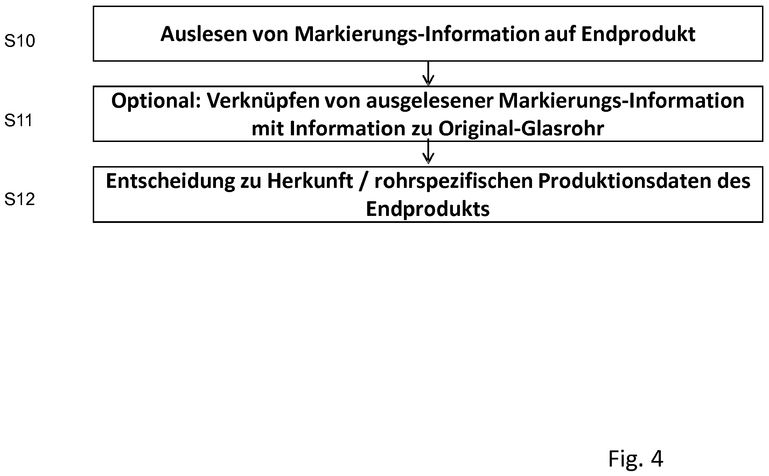

Fig. 4 zeigt ein schematisches Flussdiagramm eines Verfahrens zur Rückverfolgung eines Hohlglasprodukts, das durch Weiterverarbeiten eines Glasrohr-Halbzeugs einschließlich einer zumindest abschnittsweise durchgeführten thermischen Umformung des Glasrohr-Halbzeugs hergestellt worden ist. Dieses Verfahren kann insbesondere bei einem Verbraucher oder auch zum Zwecke der Qualitätskontrolle und -sicherung durchgeführt werden. Zunächst wird hierzu in dem Schritt S10 Information aus der zumindest einen Markierung auf dem Hohlglasprodukt ausgelesen (vgl. Figuren 2a und 2b). Optional wird diese ausgelesene Information in dem Schritt S11 mit weiterer Information zu dem Original-Glasrohr verknüpft, um auf Grundlage der Verknüpfung abschließend in dem Schritt S12 eine Entscheidung zu einer Herkunft und/oder zu rohrspezifischen Produktionsdaten des Glasrohr-Halbzeugs zu ermöglichen, aus dem das Hohlglasprodukt hergestellt worden ist. Hierzu kann ein Zugriff auf eine Datenbank vorgesehen sein, die von dem Hersteller des Original-Glasrohrs und/oder von dem weiterverarbeitenden Betrieb betrieben wird. Dieser Zugriff kann über ein Netzwerk, beispielsweise ein Unternehmens-Netzwerk oder das Internet, erfolgen, wobei bevorzugt gesicherte Verbindungen einschließlich einer Verschlüsselung eingesetzt werden.

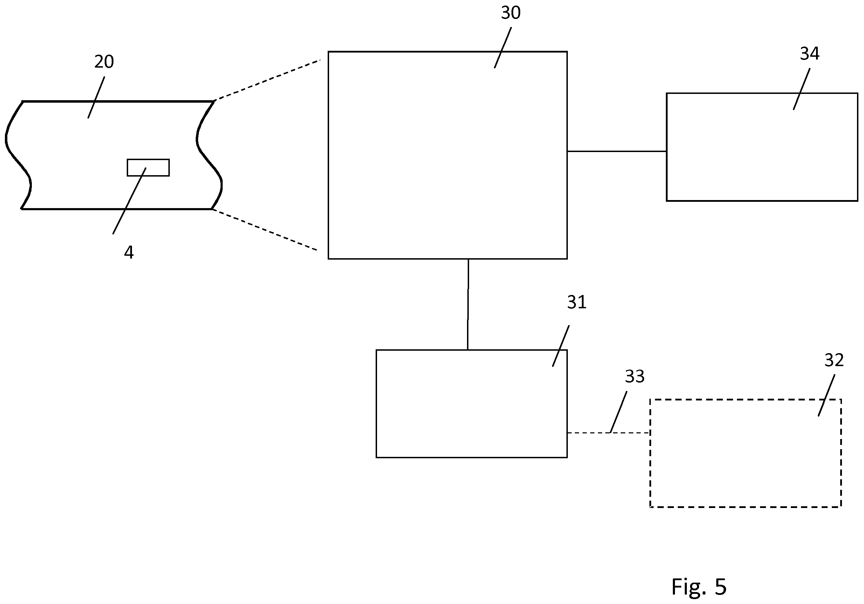

Die Fig. 5 zeigt ein schematisches Diagramm einer Vorrichtung zur Rückverfolgung eines Hohlglasprodukts, das durch Weiterverarbeiten eines Glasrohr-Halbzeugs einschließlich einer zumindest abschnittsweise durchgeführten thermischen Umformung des Glasrohr-Halbzeugs hergestellt worden ist. Gemäß der Fig. 5 ist hierzu eine Erfassungseinrichtung 30 vorgesehen, die zumindest eine Markierung auf dem Hohlglasprodukt (vgl. Figuren 2a und 2b) ausliest. Hierzu können im Falle eines digitalen Matrix-Codes (DMC), der mittels eines Verfahrens, wie in US 2003 0029849 A1, DE 102 34 002 A1 und WO 2012 028611 A1 der Anmelderin offenbart, optische Ausleseverfahren eingesetzt werden. Auch im Falle, dass die zumindest eine Markierung auf dem Hohlglasprodukt aufgedruckt wurde oder mittels einer Lasermarkierung aufgebracht wurde, kann die zumindest eine Markierung auf dem Hohlglasprodukt mit Hilfe eines optischen Ausleseverfahrens ausgelesen werden. Dies kann unter Steuerung einer Steuerungseinrichtung 34 erfolgen, insbesondere eines Prozessors. Hierzu kann Zugriff auf eine interne Datenbank 31 bestehen, in der relevante Daten gespeichert sind, die eine Rückverfolgung des Hohlglasprodukts 20 bis hin zum Glasrohr-Halbzeug ermöglichen, aus dem das Hohlglasprodukt 20 hergestellt worden ist. Diese relevanten Daten können auch auf einer externen Datenbank 32 gespeichert sein, die beispielsweise von einem Original-Hersteller von Glasrohren oder einem zertifizierten weiterverarbeitenden Betrieb betrieben wird. Der Zugriff auf diese externe Datenbank 32 kann über ein Netzwerk erfolgen, beispielsweise ein Unternehmensnetzwerk oder das Internet, wobei gesicherte Datenverbindungen, einschließlich einer Verschlüsselung, bevorzugt werden.

Selbstverständlich kann die Steuerung auch über eine Steuereinrichtung 34 erfolgen, die von einem Original-Hersteller von Glasrohren oder einem zertifizierten weiterverarbeitenden Betrieb betrieben wird. Die Datenkommunikation kann hierzu über ein Netzwerk erfolgen, beispielsweise ein Unternehmensnetzwerk oder das Internet, wobei gesicherte Datenverbindungen, einschließlich einer Verschlüsselung, bevorzugt werden.

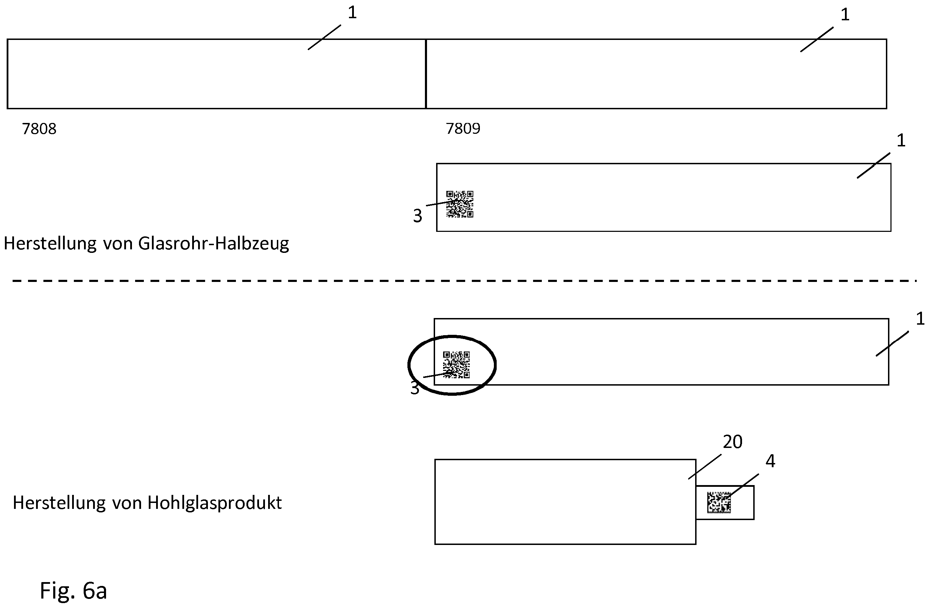

Die Fig. 6a fasst schematisch in verschiedenen Stadien der Weiterverarbeitung eines Glasrohr-Halbzeugs die an dem Glasrohr-Halbzeug vorgesehenen Markierungen zusammen. Im oberen Bildbereich ist zunächst ein kontinuierlicher Rohrstrang 1 unmittelbar nach der Rohrformung dargestellt. Von diesem Rohrstrang werden beim Glasrohr-Hersteller Glasrohr-Halbzeuge 1 mit einer vorbestimmten Länge abgelängt, beispielsweise einer Länge von 1,5 m. Die Glasrohr-Halbzeuge 1 sind jeweils mit einer Information zur Herkunft oder zur Herkunft und zu rohrspezifischen Produktionsdaten verknüpft, was in der Fig. 6a beispielhaft durch fortlaufende Seriennummern "7808", "7809" angedeutet ist. Wie weiter in der Fig. 6a dargestellt, wird beim Ablängen des Glasrohr-Halbzeugs 1 eine erste Markierung 3 an einer vorbestimmten Position des jeweiligen Glasrohr-Halbzeugs 1 erzeugt, beispielsweise an einem hinteren Ende. Die Information dieser ersten Markierung 3 ist in geeigneter Weise mit der Information zur Herkunft oder zur Herkunft und zu rohrspezifischen Produktionsdaten verknüpft, wie vorstehend beschrieben. Die relevanten Daten bei der Herstellung des Glasrohr-Halbzeugs 1 werden auch in einer Datenbank des Glasrohr-Herstellers in eineindeutiger Zuordnung zu dem jeweiligen Glasrohr-Halbzeug 1 gespeichert. Auf diese Datenbank kann ein autorisierter weiterverarbeitender Betrieb und/oder ein Abfüller zugreifen.

Im unteren Bildteil der Fig. 6a sind die Schritte dargestellt, die bei einem weiterverarbeitenden Betrieb ausgeführt werden. Zunächst wird das Glasrohr-Halbzeug 1 aus einer Transportverpackung entnommen. Dabei werden die Informationen aus der ersten Markierung 3 ausgelesen und weiterverarbeitet. Anschließend wird das Glasrohr-Halbzeug 1 weiterverarbeitet, und zwar gemäß der Fig. 6a zu einem Hohlglasprodukt 20, beispielsweise zu einem Spritzenkörper, Vial oder dergleichen. Wie in der Fig. 6a gezeigt, wird bei der Weiterverarbeitung des Glasrohr-Halbzeugs 1 die erste Markierung 3, nachdem diese ausgelesen wurde, entfernt, beispielsweise durch Abtrennen des Abschnitts mit der zusätzlichen Markierung von dem Glasrohr-Halbzeug. Die aus der ersten Markierung 3 ausgelesene Information wird zur Erzeugung einer neuen Markierung 4 ("zusätzliche Markierung") verwendet, die in der vorstehend beschriebenen Weise mit der Information der ersten Markierung 3 verknüpft ist, um eine Entscheidung zur Herkunft oder zur Herkunft und zu rohrspezifischen Produktionsdaten des Original-Glasrohr-Halbzeugs 1 zu ermöglichen.

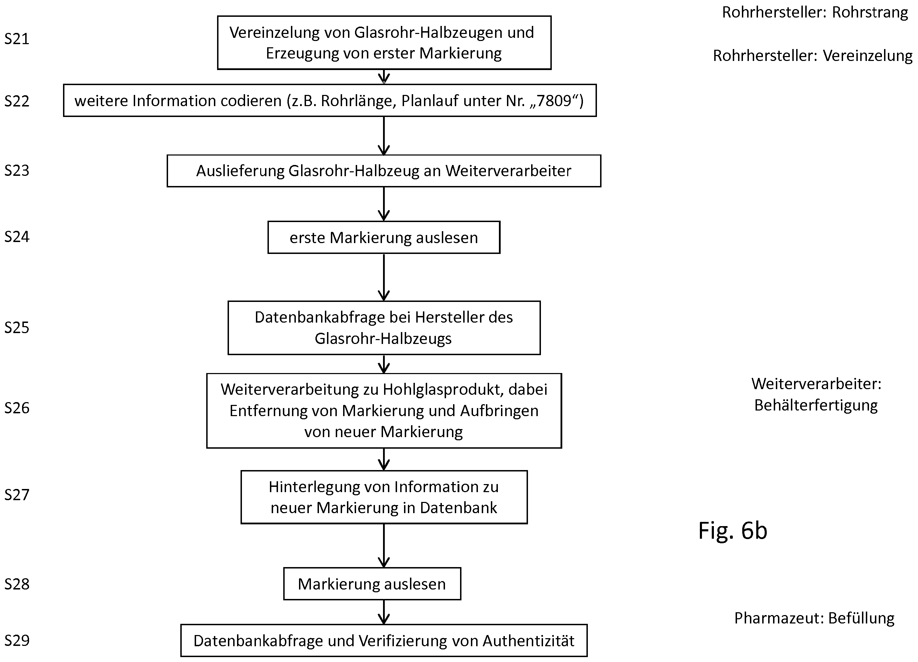

Die Fig. 6b zeigt ein schematisches Flussdiagramm der verschiedenen Stadien der Weiterverarbeitung eines Glasrohr-Halbzeugs zu einem Pharma-Packmittel und dessen weitere Verarbeitung. Zunächst werden beim Hersteller des Glasrohr-Halbzeugs von dem kontinuierlichen Glasrohrstrang in dem Schritt S21 einzelne Glasrohr-Halbzeuge abgelängt und diese vereinzelt. Dabei wird eine erste Markierung erzeugt, beispielsweise eine fortlaufende Nummer ("7809"). Dabei kann in die erste Markierung optional auch weitere Information codiert werden, was durch den optionalen Schritt S22 angedeutet ist (z.B. Information zur Länge des jeweiligen Glasrohr-Halbzeugs, zum Planlauf bei der Rohrformung usw.). Auch diese weitere Information kann in die erste Markierung mit codiert werden.

Im Anschluss an den Schritt S22 und eine weitere Verpackung erfolgt eine Auslieferung des Glasrohr-Halbzeugs an einen weiterverarbeitenden Betrieb (Schritt S23). Dieser liest nach einem Entpacken des Glasrohr-Halbzeugs die erste Markierung auf dem Glasrohr-Halbzeug aus (Schritt S24). Anschließen kann in dem Schritt S25 eine Abfrage der Datenbank beim Hersteller des Glasrohr-Halbzeugs erfolgen, wodurch die vollständige Information verfügbar wird, die der ersten Markierung zugeordnet ist. Beispielsweise kann die erste Markierung nur eine fortlaufende Nummer beinhalten, anhand der, durch Datenbankabfrage beim Hersteller des Glasrohr-Halbzeugs, dann die vollständige Information verfügbar wird. Anschließend erfolgt die weitere Verarbeitung des Glasrohr-Halbzeugs zu einem Hohlglasprodukt (Schritt S26). Dabei wird die erste Markierung nach Auslesen ihrer Information entfernt. Anschließend wird an dem Hohlglasprodukt eine neue Markierung ("zusätzliche Markierung") aufgebracht, wie vorstehend anhand der Fig. 6a beschrieben. Dabei ist die Information der neuen Markierung in der vorstehend beschriebenen Weise mit der Information der ersten Markierung verknüpft, um eine Entscheidung zur Herkunft oder zur Herkunft und zu rohrspezifischen Produktionsdaten des Original-Glasrohr-Halbzeugs 1 zu ermöglichen. Die neue Markierung kann weiterhin auch Produktionsdaten und -parameter während der Herstellung des Hohlglasprodukts beim weiterverarbeitenden Betrieb beinhalten, etwa Prozessparameter zur zumindest abschnittsweise durchgeführten thermischen Umformung des Glasrohr-Halbzeugs zu dem Hohlglasprodukt. Diese zusätzlichen Informationen werden in dem Schritt S27 auch in einer Datenbank hinterlegt, bei der es sich grundsätzlich auch um die Datenbank des Herstellers des Glasrohr-Halbzeugs handeln kann.

Nach dem Schritt S27 werden die Hohlglasprodukte an einen pharmazeutischen Betrieb ausgeliefert, wo diese befüllt werden. Hierzu wird beim pharmazeutischen Betrieb zunächst die neue Markierung auf dem Hohlglasprodukt ausgelesen (Schritt S28), um eine Entscheidung zur Herkunft oder zur Herkunft und zu rohrspezifischen Produktionsdaten des Original-Glasrohr-Halbzeugs 1 zu ermöglichen (Schritt S29). Anhand der neuen (zusätzlichen) Markierung können weitere nützliche Informationen ermittelt und an den pharmazeutischen Betrieb übermittelt werden. Diese Informationen können insbesondere Informationen betreffen, die bei der Weiterverarbeitung des Glasrohr-Halbzeugs zu dem Hohlglasprodukt ermittelt wurden, beispielsweise geometrische Größen des Hohlglasprodukts, wie beispielsweise Innendurchmesser, Außendurchmesser, Wandstärke, Längen, Variationen dieser Größen usw. Diese Parameter können bei dem pharmazeutischen Betrieb weiterverwendet werden, um ein Befüllen der Hohlglasprodukte geeignet zu steuern.

### BEZUGSZEICHENLISTE

- 1: Glasrohr oder Glasrohr-Halbzeug
- 2: Rohrstrangmarkierung
- 3: zusätzliche Markierung

- 8: erste Information
- 9: zweite Information
- 10: erster Abschnitt
- 11: zweiter Abschnitt
- 12: dritter Abschnitt

- 20: Glasrohr-Halbzeug / Hohlglasprodukt / Pharmabehälter
- 21: Spritzenkörper
- 22: Flansch
- 23: Ausstoßöffnung

- 30: Erfassungseinrichtung
- 31: interne Datenbank
- 32: externe Datenbank
- 33: Netzwerk
- 34: Prozessoreinrichtung / Steuereinrichtung

- l: vorbestimmter Abstand
- Z: Längsrichtung

## Patentansprüche

1. Verfahren zum Herstellen eines Hohlglasprodukts (20) aus einem Glasrohr-Halbzeug (1), mit den Schritten:
Bereitstellen des Glasrohr-Halbzeugs (1) mit einer ersten Markierung (2; 3), wobei die erste Markierung ohne Verändern von physikalischen oder chemischen Eigenschaften der inneren Oberfläche des Glasrohr-Halbzeugs (1) aufgebracht wird;
Weiterverarbeiten des Glasrohr-Halbzeugs (1) und zumindest abschnittsweises thermisches Umformen des Glasrohr-Halbzeugs (1) zu dem Hohlglasprodukt (20) bei Temperaturen oberhalb der Transformationstemperatur (T_{G}) des Glases des Glasrohr-Halbzeugs (1);
wobei die erste Markierung (2; 3) beim Weiterverarbeiten des Glasrohr-Halbzeugs (1) und zumindest abschnittsweisen thermischen Umformen des Glasrohr-Halbzeugs (1) zu dem Hohlglasprodukt (20) unverändert bleibt und
wobei die erste Markierung (2; 3) Information zu einer Herkunft und/oder zu rohrspezifischen Produktionsdaten des Glasrohr-Halbzeugs (1) beinhaltet und auf dem hergestellten Hohlglasprodukt (20) nach dessen Herstellung auslesbar ist, um eine Entscheidung zur Herkunft und/oder zu den rohrspezifischen Produktionsdaten des Glasrohr-Halbzeugs (1) zu ermöglichen.

2. Verfahren zum Herstellen eines Hohlglasprodukts (20) aus einem Glasrohr-Halbzeug (1), mit den Schritten:
Bereitstellen des Glasrohr-Halbzeugs (1) mit einer ersten Markierung (2; 3), wobei die erste Markierung ohne Verändern von physikalischen oder chemischen Eigenschaften der inneren Oberfläche des Glasrohr-Halbzeugs (1) aufgebracht wird;
Weiterverarbeiten des Glasrohr-Halbzeugs (1) und zumindest abschnittsweises thermisches Umformen des Glasrohr-Halbzeugs (1) zu dem Hohlglasprodukt (20) bei Temperaturen oberhalb der Transformationstemperatur (T_{G}) des Glases des Glasrohr-Halbzeugs (1); wobei
die erste Markierung (2; 3) Information zu einer Herkunft und/oder zu rohrspezifischen Produktionsdaten des Glasrohr-Halbzeugs (1) beinhaltet und
wobei die erste Markierung (2; 3) beim Weiterverarbeiten des Glasrohr-Halbzeugs (1) und zumindest abschnittsweisen thermischen Umformen des Glasrohr-Halbzeugs (1) zu dem Hohlglasprodukt (20) entfernt wird und eine zusätzliche Markierung (4) auf dem Hohlglasprodukt erzeugt wird, die die Information der ersten Markierung zur Herkunft und/oder zu den rohrspezifischen Produktionsdaten des Glasrohr-Halbzeugs (1) beinhaltet, und
die zusätzliche Markierung (4) auf dem hergestellten Hohlglasprodukt (20) nach dessen Herstellung auslesbar ist, um eine Entscheidung zur Herkunft und/oder zu den Produktionsdaten des Glasrohr-Halbzeugs (1) zu ermöglichen, das zur Herstellung des Hohlglasprodukts (20) verwendet wurde.

3. Verfahren nach Anspruch 1 oder 2, wobei die erste Markierung bei einer Rohrformgebung des Glasrohr-Halbzeugs kontinuierlich oder diskontinuierlich unter vorbestimmten Abständen (l) zueinander in Längsrichtung des Glasrohr-Halbzeugs erzeugt wird.

4. Verfahren nach Anspruch 1 oder 2, wobei die erste oder zusätzliche Markierung als einzelne Markierung (3; 4) an einer vorbestimmten Position auf dem Glasrohr-Halbzeug (1) erzeugt wird.

5. Verfahren nach Anspruch 4, wobei die zusätzliche Markierung bei Temperaturen oberhalb der Transformationstemperatur (T_{G}) des Glases des Glasrohr-Halbzeugs (1) erzeugt wird.

6. Verfahren nach einem der vorhergehenden Ansprüche, wobei die erste Markierung während einer Vereinzelung des Glasrohr-Halbzeugs (1) aus einem Endlos-Glasrohrstrang erzeugt wird.

7. Verfahren nach einem der vorhergehenden Ansprüche, wobei die erste Markierung (2; 3) und/oder die zusätzliche Markierung (4) mittels eines Druckers oder mittels eines Lasers aufgebracht wird.

8. Verfahren nach einem der vorhergehenden Ansprüche, weiterhin umfassend eine Rückverfolgung des Hohlglasprodukts (20), mit den Schritten:
Auslesen einer Information aus einer Markierung (3; 4) auf dem Hohlglasprodukt (20);
Feststellen der Herkunft und/oder von rohrspezifischen Produktionsdaten des Glasrohr-Halbzeugs (1) anhand der Information, die aus der Markierung (3; 4) ausgelesen wurde.

9. Verfahren nach Anspruch 8, wobei die Markierung weiterhin Information zu Prozessparametern bei der Weiterverarbeitung des Glasrohr-Halbzeugs (1) zu dem Hohlglasprodukt (20) umfasst, mit dem weiteren Schritt:
Feststellen der Prozessparameter bei der Weiterverarbeitung des Glasrohr-Halbzeugs (1) zu dem Hohlglasprodukt (20) anhand der Information, die aus der Markierung (3; 4) ausgelesen wurde.

10. Verfahren nach Anspruch 8 oder 9, wobei
das Feststellen der Herkunft und/oder von rohrspezifischen Produktionsdaten des Glasrohr-Halbzeugs (1) und/oder
das Feststellen der Prozessparameter bei der Weiterverarbeitung des Glasrohr-Halbzeugs (1) zu dem Hohlglasprodukt (20)
einen Zugriff auf eine Datenbank über ein Netzwerk (33) umfasst, in der weitere Information zur Herkunft und/oder zu den rohrspezifischen Produktionsdaten und/oder zu den Prozessparametern abgespeichert ist.

## Claims

1. Method of manufacturing a hollow glass product (20) from a glass tube semi-finished product (1), comprising the steps of:
providing the glass tube semi-finished product (1) with a first mark (2; 3), wherein the first mark is applied without changing the physical or chemical properties of the inner surface of the glass tube semi-finished product (1);
further processing of the glass tube semi-finished product (1) and at least section-wise thermal reshaping the glass tube semi-finished product (1) into the hollow glass product (20) at temperatures above the transformation temperature (T_{G}) of the glass of the glass tube semi-finished product (1);
wherein the first mark (2; 3) remains unchanged during further processing of the glass tube semi-finished product (1) and the at least section-wise thermal reshaping of the glass tube semi-finished product (1) into the hollow glass product (20), and
wherein the first mark (2; 3) includes information on an origin and/or on tube-specific production data of the glass tube semi-finished product (1) and can be read out on the manufactured hollow glass product (20) after its manufacture in order to enable a decision on the origin and/or on the tube-specific production data of the glass tube semi-finished product (1).

2. Method for producing a hollow glass product (20) from a glass tube semi-finished product (1), comprising the steps of:
providing the glass tube semi-finished product (1) with a first mark (2; 3), wherein the first mark is applied without changing physical or chemical properties of the inner surface of the glass tube semi-finished product (1);
further processing of the glass tube semi-finished product (1) and thermal reshaping of the glass tube semi-finished product (1) at least section-wise into the hollow glass product (20) at temperatures above the transformation temperature (T_{G}) of the glass of the glass tube semi-finished product (1), wherein
the first mark (2; 3) includes information on an origin and/or on tube-specific production data of the glass tube semi-finished product (1), and
wherein the first mark (2; 3) is removed during further processing of the glass tube semi-finished product (1) and the at least section-wise thermal reshaping of the glass tube semi-finished product (1) into the hollow glass product (20), and an additional mark (4) is produced on the hollow glass product, which includes the information of the first mark on the origin and/or on the tube-specific production data of the glass tube semi-finished product (1), and
the additional mark (4) can be read out on the manufactured hollow glass product (20) after its manufacture in order to enable a decision to be made on the origin and/or on the production data of the glass tube semi-finished product (1) used to manufacture the hollow glass product (20).

3. Method according to claim 1 or 2, wherein the first mark is produced during a tube formation of the glass tube semi-finished product continuously or discontinuously at predetermined distances (1) from one another in the longitudinal direction of the glass tube semi-finished product.

4. Method according to claim 1 or 2, wherein the first or the additional mark is produced as a single mark (3; 4) at a predetermined position on the glass tube semi-finished product (1).

5. Method according to claim 4, wherein the additional mark is produced at temperatures above the transformation temperature (T_{G}) of the glass of the glass tube semi-finished product (1).

6. Method according to any one of the preceding claims, wherein the first mark is produced during a separation of the glass tube semi-finished product (1) from an endless glass tube strand.

7. Method according to any one of the preceding claims, wherein the first mark (2; 3) and/or the additional mark (4) is applied by means of a printer or by means of a laser.

8. Method according to any one of the preceding claims, further comprising a tracing of the hollow glass product (20), comprising the steps of:
reading out information from a mark (3; 4) on the hollow glass product (20);
determining the origin and/or tube-specific production data of the glass tube semi-finished product (1) on the basis of the information read out from the mark (3; 4).

9. Method according to claim 8, wherein the mark further comprises information on process parameters during the further processing of the glass tube semi-finished product (1) into the hollow glass product (20), comprising the further step of:
determining the process parameters during the further processing of the glass tube semi-finished product (1) into the hollow glass product (20) by use of the information read out from the mark (3; 4).

10. Method according to claim 8 or 9, wherein
determining the origin and/or of tube-specific production data of the glass tube semi-finished product (1), and/or
determining the process parameters during the further processing of the glass tube semi-finished product (1) into the hollow glass product (20)
comprises access to a database via a network (33), in which further information on the origin and/or on the tube-specific production data and/or on the process parameters are stored.

## Revendications

1. Procédé de fabrication d'un produit en verre creux (20) à partir d'un produit semi-fini (1) de type tube de verre, le procédé comprenant les étapes :
pourvoir le produit semi-fini (1) de type tube de verre d'un premier marquage (2 ; 3), le premier marquage étant appliqué sans modifier les propriétés physiques ou chimiques de la surface intérieure du produit semi-fini (1) de type tube de verre ;
effectuer un traitement ultérieur sur le produit semi-fini (1) de type tube de verre et un formage thermique sur le produit semi-fini (1) de type tube de verre au moins par portions pour obtenir le produit en verre creux (20) à des températures supérieures à la température de transformation (T_{G}) du verre du produit semi-fini (1) de type tube de verre ;
dans lequel le premier marquage (2 ; 3) reste inchangé pendant le traitement ultérieur du produit semi-fini (1) de type tube de verre et le formage thermique au moins par portions du produit semi-fini (1) de type tube de verre pour obtenir le produit en verre creux (20) et
dans lequel le premier marquage (2 ; 3) contient des informations sur l'origine et/ou sur des données de production spécifiques au tube du produit semi-fini (1) de type tube de verre et peut être lu sur le produit en verre creux fabriqué (20) après sa fabrication afin de prendre une décision concernant l'origine et/ou les données de production spécifiques au tube du produit semi-fini (1) de type tube de verre.

2. Procédé de fabrication d'un produit en verre creux (20) à partir d'un produit semi-fini (1) de type tube de verre, le procédé comprenant les étapes :
pourvoir le produit semi-fini (1) de type tube de verre d'un premier marquage (2 ; 3), le premier marquage étant appliqué sans modifier les propriétés physiques ou chimiques de la surface intérieure du produit semi-fini (1) de type tube de verre ;
effectuer un traitement ultérieur sur le produit semi-fini (1) de type tube de verre et un formage thermique sur le produit semi-fini (1) de type tube de verre au moins par portions à des températures supérieures à la température de transformation (T_{G}) du verre du produit semi-fini (1) de type tube de verre pour obtenir le produit en verre creux (20) ; où
le premier marquage (2 ; 3) contient des informations sur une origine et/ou sur des données de production spécifiques au tube du produit semi-fini (1) de type tube de verre et
dans lequel le premier marquage (2 ; 3) est retiré lors du traitement ultérieur du produit semi-fini (1) de type tube de verre et du formage thermique au moins par portions du produit semi-fini (1) de type tube de verre pour obtenir le produit en verre creux (20) et un marquage supplémentaire (4), qui contient les informations du premier marquage sur l'origine et/ou sur les données de production spécifiques au tube du tube en verre semi-fini (1), est réalisé sur le produit en verre creux et
le marquage supplémentaire (4) sur le produit en verre creux fabriqué (20) pouvant être lu après la production dudit produit afin de prendre une décision sur l'origine et/ou sur les données de production du produit semi-fini (1) de type tube de verre qui est utilisé pour fabriquer le produit en verre creux (20).

3. Procédé selon la revendication 1 ou 2, dans lequel le premier marquage est réalisé de manière continue ou discontinue à des distances prédéterminées (1) les unes des autres dans la direction longitudinale du produit semi-fini de type tube de verre lors du formage du produit semi-fini de type tube de verre.

4. Procédé selon la revendication 1 ou 2, dans lequel le premier marquage ou le marquage supplémentaire est réalisé sous la forme d'un marquage individuel (3 ; 4) à une position prédéterminée sur le produit semi-fini (1) de type tube de verre.

5. Procédé selon la revendication 4, dans lequel le marquage supplémentaire est réalisé à des températures supérieures à la température de transformation (T_{G}) du verre du produit semi-fini (1) de type tube de verre.

6. Procédé selon l'une des revendications précédentes, dans lequel le premier marquage est réalisé lors d'une séparation du produit semi-fini (1) de type tube de verre d'une ligne de tube de verre sans fin.

7. Procédé selon l'une des revendications précédentes, dans lequel le premier marquage (2 ; 3) et/ou le marquage supplémentaire (4) sont appliqués au moyen d'une imprimante ou au moyen d'un laser.

8. Procédé selon l'une des revendications précédentes, comprenant en outre le traçage du produit en verre creux (20), le procédé comprenant les étapes :
lire des informations à partir d'un marquage (3 ; 4) placé sur le produit en verre creux (20) ;
déterminer l'origine et/ou des données de production spécifiques au tube du produit semi-fini (1) de type tube de verre sur la base des informations lues à partir le marquage (3 ; 4).

9. Procédé selon la revendication 8, dans lequel le marquage comprend en outre des informations sur les paramètres de processus pendant le traitement ultérieur du produit semi-fini (1) de type tube de verre pour obtenir le produit en verre creux (20), le procédé comprenant l'étape supplémentaire :
déterminer des paramètres de processus lors de la transformation ultérieure du produit semi-fini (1) de type tube de verre pour obtenir le produit en verre creux (20) sur la base des informations lues dans le marquage (3 ; 4).

10. Procédé selon la revendication 8 ou 9, dans lequel
la détermination de l'origine et/ou des données de production spécifiques au tube du produit semi-fini (1) de type tube de verre et/ou
la détermination des paramètres de processus lors de la transformation ultérieure du tube de verre semi-fini (1) pour obtenir le produit en verre creux (20)
comprennent un accès à une base de données par le biais d'un réseau (33) dans laquelle d'autres informations sur l'origine et/ou des données de production spécifiques au tube et/ou sur les paramètres de processus sont mémorisées.
